(19) Europäisches Patentamt / European Patent Office / Office européen des brevets

(11) **EP 2 423 256 B1**

(12) **EUROPEAN PATENT SPECIFICATION**

(45) Date of publication and mention
of the grant of the patent:
**16.01.2013  Bulletin 2013/03**

(51) Int Cl.:
***C08L 23/10*** *(2006.01)*          ***C08K 3/34*** *(2006.01)*

(21) Application number: **10174360.7**

(22) Date of filing: **27.08.2010**

(54) **Alumino silicate reinforced polyolefins**

Aluminiumsilicatverstärkte Polyolefine

Polyoléfines renforcées à l'aluminosilicate

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**29.02.2012  Bulletin 2012/09**

(73) Proprietor: **Borealis AG
1220 Vienna (AT)**

(72) Inventor: **Hemmeter, Markus
91781 Weissenburg (DE)**

(74) Representative: **Maiwald Patentanwalts GmbH
Elisenhof
Elisenstrasse 3
80335 München (DE)**

(56) References cited:
**EP-A1- 1 942 135     AT-B- 408 885
JP-A- 1 318 051     US-A- 4 259 230**

**Description**

The present invention relates to a polymer composition comprising a heterophasic polypropylene and solid alumino silicate microspheres.

Today, polypropylene is widely and increasingly used for exterior and interior automotive equipment (e.g. bumper, dashboards, centre console, cladding, etc.). Such material needs to comply with a number of different, sometimes conflicting requirements at reasonable costs.

Generally, heterophasic polypropylenes (i.e. heterophasic polymers comprising a propylene homo- or copolymer matrix and an elastomeric phase dispersed in said matrix) are used for injection moulded products in engineering applications. Desired properties include *inter alia* high scratch resistance, low emissions (i.e. low amount of volatile organic compounds VOC), light weight (i.e. low density), and high impact strength. Many efforts have been made to provide a good balance between these properties.

Talc-filled polypropylene is frequently used in automotive applications.

AT 408 885 B discloses a composition comprising a propylene copolymer, an ethylene copolymer, an mineral fillers which are preferably anisotropic such as talc or mica.

US 4,259,230 discloses a polypropylene composition comprising a propylene/ethylene block copolymer, a propylene homopolymer, an EPM or EPDM elastomer, and mica.

JP 01318051 discloses a resin composition containing a silicic filler surface-treated with an alkyltrialkoxysilane.

EP 1 942 135 A1 discloses a polyolefin composition comprising an olefin homo- or copolymer, and an amorphous silica as a taste and/or odour reducing agent.

One of the key issues in automotive applications are low emissions and low amounts of volatile organic compounds (VOC).

Considering the statements provided above, it is an object of the present invention to provide a polymer composition having low emissions, low amounts of volatile compounds and high scratch resistance while still maintaining impact strength on a high level.

The object is solved by providing a composition, comprising

(i) a heterophasic polymer which comprises

-   a matrix comprising a propylene homo- and/or copolymer, and
-   an elastomeric phase dispersed in the matrix,

(ii) solid alumino silicate microspheres having a median particle size $d_{50}$ of less than 100 $\mu$m, wherein the solid alumino silicate microspheres are obtained from fly ash.

As will be discussed below in further detail, adding the solid alumino silicate microspheres to the heterophasic polymer as specified above results in a material having high scratch resistance, low emissions and high impact strength.

As indicated above, the composition of the present invention comprises as a first component (i) a heterophasic polymer which comprises

-   a matrix comprising a propylene homo- and/or copolymer, and
-   an elastomeric phase dispersed in the matrix.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene homo- or copolymer is present in such an amount so as to form a continuous phase which can act as a matrix.

The matrix phase can be made of the propylene homo- and/or copolymer only but can also comprise additional polymers, in particular polymers which can be blended homogeneously with the propylene homo- or copolymer and together form a continuous phase which can act as a matrix. In a preferred embodiment, at least 80 wt% of the matrix, more preferably at least 90 wt%, even more preferably at least 95 wt% of the matrix is made of the propylene homo- and/or copolymer. The matrix may even consist of the propylene homo- and/or copolymer.

Preferably, the propylene homo- and/or copolymer of the matrix has a melt flow rate MFR(230°C, 2.16 kg) within the range of 0.25 to 200 g/10 min, more preferably within the range of 5 to 100 g/10 min, and even more preferably within the range of 8 to 80 g/10 min.

As indicated above, the polypropylene of the matrix can be a homopolymer or a copolymer, or a mixture of these.

If the matrix comprises a propylene copolymer, it preferably has comonomer units derived from ethylene and/or a $C_{4-8}$ alpha-olefin.

Preferably, the propylene copolymer of the matrix has a comonomer content of 35 wt% or less, more preferably of from 10 wt% to 30 wt.

The propylene homo- or copolymer of the matrix may be produced by a single- or multistage process polymerisation of propylene or propylene with alpha-olefin and/or ethylene such as bulk polymerisation, gas phase polymerisation, solution polymerisation or combinations thereof using conventional catalysts. A homo- or copolymer can be made either in loop reactors or in a combination of loop and gas phase reactors. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110 °C and at a pressure from 10 to 100 bar. Ziegler-Natta catalysts (especially a high yield Ziegler-Natta system containing Ti, Cl, Mg and Al) as well as metallocene catalysts are suitable catalysts.

In addition to the matrix defined above, the heterophasic polymer comprises an elastomeric phase dispersed in the matrix.

Preferably, the elastomeric phase is an elastomeric ethylene/$C_{3-8}$ alpha-olefin polymer.

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric ethylene/$C_3$-$C_8$ alpha-olefin polymer is an ethylene/propylene rubber, which may additionally comprise $C_4$-$C_8$ alpha-olefin monomer units.

Preferably, the heterophasic polymer has a melt flow rate MFR(230°C, 2.16 kg) of from 0.25 g/10 min to 100 g/10 min, more preferably of from 5 g/10 min to 80 g/10 min, even more preferably of from 8 g/10 min to 60 g/10 min.

In a preferred embodiment, the heterophasic polymer has an amount of xylene cold solubles XCS of from 10 wt% to 45 wt%, more preferably of from 15 wt% to 40 wt%, even more preferably of from 20 wt% to 35 wt%.

The amount of xylene cold solubles (XCS) is a parameter frequently used to determine the amount of elastomeric and/or amorphous components within a polymer composition (sometimes also referred to as xylene solubles XS). The measuring method is described in further detail below under the headline "Measuring Methods". As a first approximation, the amount of the xylene cold solubles XCS corresponds to the amount of rubber and the amount of those polymer chains of the matrix with low molecular weight and low stereoregularity.

The elastomeric ethylene/$C_{3-8}$ alpha-olefin polymer may be produced by known polymerisation processes such as solution, suspension and gas-phase polymerisation using conventional catalysts. Ziegler-Natta catalysts as well as metallocene catalysts are suitable catalysts.

A widely used process is the solution polymerisation. The monomers are polymerised in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. By flashing off the propylene and comonomers, the polymerisation process is completed.

The gas-phase polymerisation technology uses one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

Further information about the production of elastomeric copolymers is also provided in e.g. US 3,300,459, US 5,919,877, EP 0 060 090 A1 and in a company publication by EniChem "DUTRAL, Ethylene-Propylene Elastomers", pages 1-4 (1991).

Alternatively, elastomeric copolymers, which are commercially available and which fulfil the indicated requirements, can be used.

If the elastomeric polymer such as an ethylene/propylene rubber, is prepared separately from the polypropylene constituting the matrix, it can be subsequently blended with the matrix polymer by any conventional blending means, e.g. melt blending in an extruder.

However, it is preferred that the elastomeric ethylene/$C_{3-8}$ alpha-olefin polymer is prepared as a reactor blend together with the propylene homo- and/or copolymer of the matrix, e.g. starting with the production of the matrix polymer in a loop reactor and transferring the product into a gas phase reactor, where the elastomeric copolymer is polymerised.

Preferably, the heterophasic polymer composition is prepared by reactor blending in a multistep process comprising at least one loop reactor and at least one gas phase reactor.

As indicated above, the composition of the present invention comprises as a further component (ii) solid alumino silicate microspheres having a median particle size $d_{50}$ of less than 100 $\mu$m, wherein the solid alumino silicate microspheres are obtained from fly ash.

In a preferred embodiment, the solid alumino silicate microspheres have a median particle size $d_{50}$ within the range of from 0.3 $\mu$m to less than 100 $\mu$m, more preferably of from 1 $\mu$m to 60 $\mu$m, even more preferably of from 3 $\mu$m to 15 $\mu$m.

Preferably, the solid alumino silicate microspheres have a median particle size $d_{50}$ of 15 $\mu$m or less, more preferably 10 $\mu$m or less, and do not contain particles having a particle size above 150 $\mu$m, more preferably above 100 $\mu$m.

Preferably, the solid alumino silicate microspheres have a density of from 2.0 g/cm$^3$ to 2.3 g/cm$^3$, more preferably of from 2.1 g/cm$^3$ to 2.25 g/cm$^3$.

The solid alumino silicate microspheres may comprise a hydrophobic surface layer, which is preferably obtained by reacting the surface of the solid alumino silicate microspheres with a hydrophobization agent such as a silane compound, e.g. aminosilanes, alkylsilanes and/or alkoxysilanes. Alternatively, it is also possible within the present invention that the solid alumino silicate microspheres do not comprise such a hydrophobic surface layer

The solid alumino silicate microspheres are obtained from fly ash. The microspheres can be formed in the combustion of fuel such as coal or oil. Thus, the microspheres can be one of the by-products which are present in fly ash.

Fly ash comprising the alumino silicate microspheres can be subjected to further treatment steps such as grinding or pulverization. The microspheres can be separated from fly ash by known standard procedures, possibly in combination with means for selecting the desired particle size fraction.

The solid alumino silicate microspheres as specified above are also commercially available, e.g. under the trade name Mintron such as Mintron 7 from RockTron.

Preferably, the solid alumino silicate microspheres are present in an amount of from 1wt% to 60 wt%, more preferably of from 5 wt% to 50 wt%, even more preferably of from 5 wt% to 30 wt%, based on the total weight of the composition.

Optionally, polyethylene and/or external plastomers like $C_4$-$C_8$ olefin polymers may be added as well.

Preferably, the composition has a melt flow rate MFR(230°C, 2.16 kg) of from 0.25 g/10 min to 60 g/10 min, more preferably of from 5 g/10 min to 35 g/10 min, even more preferably of from 5 g/10 min to 35 g/10 min.

Preferably, the composition has an amount of xylene cold solubles XCS of from 5 wt% to 40 wt%, more preferably of from 10 wt% to 35 wt%.

Preferably, the composition has a density of from 0.95 g/cm$^3$ to 1.3 g/cm$^3$, more preferably of from 0.95 g/cm$^3$ to 1.2 g/cm$^3$, even more preferably of from 0.95 g/cm$^3$ to 1.1 g/cm$^3$.

Preferably, the composition has a scratch resistance $\Delta$L, measured by the method defined in the description further below, of less than 5.0, more preferably less than 4.0, even more preferably less than 3.0.

Preferably, the composition has a content of volatiles of less than 50, more preferably less than 35, even more preferably less than 30 $\mu$g Carbon equivalents/g, measured according to VDA 277.

Preferably, the composition has a Charpy impact strength at 23°C, determined according to ISO 179/1eA, of at least 4.0 kJ/m$^2$, more preferably at least 5 kJ/m$^2$.

The composition of the present invention can be obtained by mixing the heterophasic polymer with the solid alumino silicate microspheres via commonly known standard procedures, such as twin screw compounding or inline compounding.

According to a further aspect, the present invention relates to a shaped article, preferably an injection-moulded article, which comprises the composition as described above. Preferably, the article is used in automotive applications.

According to a further aspect, the present invention relates to the use of the solid alumino silicate microspheres as defined above as an anti-scratch additive in a polyolefin, preferably a polypropylene, more preferably the heterophasic polymer as defined above.

According to a further aspect, the present invention relates to the use of the solid alumino silicate microspheres as defined above, preferably as a talc substitute, for reducing the amount of volatiles, determined according to VDA 277, of a polyolefin, preferably a polypropylene, more preferably the heterophasic polymer as defined above. As a reference for determining whether the amount of volatiles has been reduced, the same polyolefin (more preferably the same polypropylene, even more preferably the same heterophasic polymer) having the same amount of talc is used.

The invention will now be described in further detail by making reference to the following examples.

**Examples**

**I. Measuring methods**

If not indicated otherwise, the parameters mentioned in the present invention will be determined by the measuring methods indicated below.

### 1. Melt flow rate MFR

Melt flow rate was measured according to ISO 1133 at 230°C and 2.16 kg (MFR2.16kg/230°C).

### 2. Charpy impact strength

Charpy impact strength was determined according to ISO 179/1eA on injection molded test specimens made according to ISO 1873. The dimension of the test specimen was 80x10x4 mm.

### 3. Xylene cold soluble fraction XCS

XCS was determined as follows:

2.0 g of polymer was dissolved in 250 ml p-xylene at 135°C under agitation. After $30\pm2$ minutes the solution was allowed to cool for 15 minutes at ambient temperature and then allowed to settle for 30 minutes at $25\pm0.5$°C. The solution was filtered with filter paper into two 100 ml flasks.

The solution from the first 100 ml vessel was evaporated in nitrogen flow and the residue dried under vacuum at 90°C until constant weight is reached.

$$XS\% = (100 \times m1 \times v0) / (m0 \times v1),$$

wherein
m0= initial polymer amount (g)
m1= weight of residue (g)
v0= initial volume (ml)
v1= volume of analyzed sample (ml)

### 4. Comonomer content

Measurement of the comonomer content (wt%) was based on Fourier transform infrared spectroscopy (FTIR) determination calibrated with $^{13}$C-NMR.

### 5. Density

Density of the final composition (i.e. polymer containing alumino silicate microspheres) was determined according to ISO 1183.
Density of the alumino silicate microspheres was determined according to ISO 787/10

### 6. Particle size, median particle size $d_{50}$

Particle size, median particle size is measured by laser diffraction (Malvern Laser diffraction particle sizer) according to ISO 13320-1.

### 7. Emission of volatiles

The content of volatiles was determined according to VDA 277:1995 using a gas chromatography (GC) device with a WCOT-capillary column of 0.25 mm inner diameter and 30 m length. The GC settings were as follows: 3 minutes isothermal at 50°C, heat up to 200°C at 12 K/min, 4 minutes isothermal at 200°C, injection-temperature: 200°C, detection-temperature: 250°C, carrier helium, flow-mode split 1:20 and average carrier-speed 22 - 27 cm/s.

### 8. Scratch resistance

To determine the scratch resistance a Cross Hatch Cutter Model 420p, manufactured by Erichsen, was used. A cross hatch (40 x 40 mm, distance between each grid line 2mm) was cut onto the specimen surface with grain K09. The instrument is equipped with a steel ball tip (1.0 mm). The cutting force is 10 N. A cutting speed of 1000 mm/min is used.

Scratch evaluation was carried out by measuring the $\Delta L$ value by means of a spectral photometer. This measurement corresponds to the difference in brightness of the treated versus the untreated polymer surface.

A detailed test description of the test method can be found in the article "Evaluation of scratch resistance in multiphase PP blends" by Thomas Koch and Doris Machl, published in POLYMER TESTING 26 (2007), p. 927-936.

## 9. Puncture test

Puncture test was performed according specification ISO 6603-2/40/20/C/4,4". Samples are produced via injection moulded 60*60*3mm, lubricated clamped in supporting ring of dia. 40mm and than forced with striker diameter of 20mm with 4,4m/s at RT.

## II. Samples prepared

Two samples, Inventive Example 1 (IE1) and Comparative Example 1 (CE1), were prepared. In both samples, the same heterophasic polypropylene was used.

In Inventive Example 1, the heterophasic polymer was blended with solid alumino silicate microspheres, whereas in Comparative Example 1 talc was added.

The solid alumino silicate microspheres had a median particle size $d_{50}$ of 7 $\mu$m and a density of 2.2 g/cm$^3$. Such solid alumino silicate microspheres are commercially available under the trade name Mintron 7. The talc used in CE1 had a median particle size $d_{50}$ of 2.1 $\mu$m.

Further properties of the compositions prepared in IE1 and CE1 are summarized below in Table 1.

Table 1: Compositions of IE1 and CE1

|  | Comp. Ex. 1 | Invent. Ex. 1 |
|---|---|---|
| Heterophasic Polymer [wt%] | 82.45 | 82.45 |
| Phenolic antioxidant [wt%] | 0.15 | 0.15 |
| Phosphorous antioxidant [wt%] | 0.2 | 0.2 |
| PE Masterbatch with 40 wt% carbon black [wt%] | 1 | 1 |
| PP powder [wt%] | 1.2 | 1.2 |
| Talc [wt%] | 15 |  |
| Solid alumino silicate microspheres [wt%] |  | 15 |
| MFR(230°C, 2.16 kg) [g/10 min] | 14.8 | 15.9 |
| Density according IS01183 [g/cm$^3$] | 1,01 | 0,99 |

Amount of volatile compounds, scratch resistance, charpy impact strength, puncture properties were measured on samples according to IE1 and CE1.

The results are summarized in Table 2 below.

Table 2: Properties of samples according to CE1 and IE1

|  | Sample of CE1 | Sample of IE1 |
|---|---|---|
| Content of volatiles, VDA 277 [$\mu$g C/g] | 36 | 22 |
| Scratch resistance $\Delta L$ | 5.63 | 2.59 |
| Charpy impact strength, ISO 179/1eA [kJ/m$^2$] | 3.9 | 5.4 |
| Puncture test (plate), 23°C, maximum force [N] | 3105 | 3245 |

The results of Table 2 clearly indicate that an improved balance between low emission of volatiles, high scratch resistance and high impact strength is obtained with a composition comprising the heterophasic polypropylene in combination with the solid alumina silicate microspheres as specified above.

**Claims**

1. A composition, comprising

   (i) a heterophasic polymer which comprises

   - a matrix comprising a propylene homo- and/or copolymer, and
   - an elastomeric phase dispersed in the matrix,

   (ii) solid alumino silicate microspheres having a median particle size $d_{50}$ of less than 100 $\mu$m, wherein the solid alumino silicate microspheres are obtained from fly ash.

2. The composition according to claim 1, wherein the propylene copolymer of the matrix comprises comonomer units derived from ethylene and/or a $C_{4-8}$ alpha-olefin, and/or the propylene copolymer of the matrix has a comonomer content of 35 wt% or less.

3. The composition according to claim 1 or 2, wherein the elastomeric phase dispersed in the matrix is an ethylene/$C_{3-8}$ alpha-olefin elastomer.

4. The composition according to one of the preceding claims, wherein the heterophasic polymer has a melt flow rate MFR(230°C, 2.16 kg) of from 0.25 g/10 min to 100 g/10 min, and/or wherein the heterophasic polymer has a xylene cold soluble fraction XCS of from 10 wt% to 45 wt%.

5. The composition according to one of the preceding claims, wherein the solid alumino silicate microspheres have a density of from 2.0 g/cm$^3$ to 2.3 g/cm$^3$.

6. The composition according to one of the preceding claims, wherein the solid alumino silicate microspheres comprise a hydrophobic surface layer, which is preferably obtained by reacting the surface of the solid alumino silicate microspheres with a hydrophobization agent.

7. The composition according to one of the preceding claims, wherein the solid alumino silicate microspheres are present in an amount of from 1 wt% to 60 wt%, based on the total weight of the composition.

8. The composition according to one of the preceding claims, wherein the composition has a melt flow rate MFR(230°C, 2.16 kg) of from 0.25 g/10 min to 60 g/10 min, and/or wherein the composition has an amount of xylene cold solubles XCS of from 5 wt% to 40 wt%.

9. The composition according to one of the preceding claims, wherein the composition has a density of from 0.95 g/cm$^3$ to 1.3 g/cm$^3$.

10. The composition according to one of the preceding claims, wherein the composition has a scratch resistance $\Delta$L, measured by the method defined in the description, of less than 5.0, and/or wherein the composition has a content of volatiles of less than 50 $\mu$g Carbon equivalents/g, measured according to VDA 277.

11. The composition according to one of the preceding claims, wherein the composition has a Charpy impact strength, determined according to ISO 179/1eA, of at least 4.0 kJ/m$^2$ at 23°C.

12. An article, preferably an injection molded article, comprising the composition according to one of the claims 1 to 11.

13. Use of the solid alumino silicate microspheres according to one of the claims 1 to 11 as an anti-scratch additive in a polyolefin.

14. Use of the solid alumino silicate microspheres according to one of the claims 1 to 11 for reducing the amount of volatiles, determined according to VDA 277, of a polyolefin.

**Patentansprüche**

1. Zusammensetzung, umfassend

   (i) ein heterophasisches Polymer, das umfasst

   - eine Matrix, umfassend ein Propylen-Homo- und/oder -Copolymer, und
   - eine elastomere Phase, die in der Matrix dispergiert ist,

   (ii) feste Alumino-Silicat-Mikrokugeln mit einer mittleren Teilchengröße $d_{50}$ von weniger als 100 $\mu$m, wobei die festen Alumino-Silicat-Mikrokugeln aus Flugasche erhalten werden.

2. Zusammensetzung nach Anspruch 1, wobei das Propylen-Copolymer von der Matrix Comonomer-Einheiten, abgeleitet von Ethylen und/oder einem $C_{4-8}$-$\alpha$-Olefin, umfasst und/oder das Propylen-Copolymer von der Matrix einen Comonomer-Gehalt von 35 Gew.-% oder weniger aufweist.

3. Zusammensetzung nach Anspruch 1 oder 2, wobei die elastomere Phase, die in der Matrix dispergiert ist, ein Ethylen / $C_{3-8}$-$\alpha$-Olefin-Elastomer ist.

4. Zusammensetzung nach einem der vorangehenden Ansprüche, wobei das heterophasische Polymer eine Schmelzflussrate MFR (230°C, 2,16 kg) von 0,25 g/10 min bis 100 g/10 min aufweist, und/oder wobei das heterophasische Polymer eine in Xylol kalt lösliche Fraktion XCS von 10 Gew.-% bis 45 Gew.-% aufweist.

5. Zusammensetzung nach einem der vorangehenden Ansprüche, wobei die festen Alumino-Silicat-Mikrokugeln eine Dichte von 2,0 g/cm$^3$ bis 2,3 g/cm$^3$ aufweisen.

6. Zusammensetzung nach einem der vorangehenden Ansprüche, wobei die festen Alumino-Silicat-Mikrokugeln eine hydrophobe Oberflächenschicht umfassen, die vorzugsweise durch Umsetzen der Oberfläche von den festen Alumino-Silicat-Mikrokugeln mit einem Hydrophobierungsmittel erhalten wird.

7. Zusammensetzung nach einem der vorangehenden Ansprüche, wobei die festen Alumino-Silicat-Mikrokugeln in einer Menge von 1 Gew.-% bis 60 Gew.-%, bezogen auf das Gesamtgewicht der Zusammensetzung, vorliegen.

8. Zusammensetzung nach einem der vorangehenden Ansprüche, wobei die Zusammensetzung eine Schmelzflussrate MFR (230°C, 2,16 kg) von 0,25 g/10 min bis 60 g/10 min aufweist, und/oder wobei die Zusammensetzung eine Menge an in Xylol kalt Löslichem XCS von 5 Gew.-% bis 40 Gew.-% aufweist.

9. Zusammensetzung nach einem der vorangehenden Ansprüche, wobei die Zusammensetzung eine Dichte von 0,95 g/cm$^3$ bis 1,3 g/cm$^3$ aufweist.

10. Zusammensetzung nach einem der vorangehenden Ansprüche, wobei die Zusammensetzung eine Kratz-Festigkeit $\Delta$L, gemessen durch das Verfahren, das in der Beschreibung definiert wird, von weniger als 5,0 aufweist, und/oder wobei die Zusammensetzung einen Gehalt an flüchtigen Stoffen von weniger als 50 $\mu$g Kohlenstoff-Äquivalenten/g, gemessen gemäß VDA 277, aufweist.

11. Zusammensetzung nach einem der vorangehenden Ansprüche, wobei die Zusammensetzung eine Schlagfestigkeit nach Charpy, bestimmt gemäß ISO 179/1eA, von mindestens 4,0 kJ/m$^2$ bei 23°C, aufweist.

12. Gegenstand, vorzugsweise ein durch Spritzguss geformter Gegenstand, umfassend die Zusammensetzung nach einem der Ansprüche 1 bis 11.

13. Verwendung der festen Alumino-Silicat-Mikrokugeln nach einem der Ansprüche 1 bis 11 als ein Kratz-Festigkeits-Additiv in einem Polyolefin.

14. Verwendung der festen Alumino-Silicat-Mikrokugeln nach einem der Ansprüche 1 bis 11 zum Vermindern der Menge an flüchtigen Stoffen, bestimmt gemäß VDA 277, von einem Polyolefin.

**Revendications**

1. Composition, comprenant

    (i) un polymère hétérophasique qui comprend

        - une matrice comprenant un homo- et/ou co-polymère de propylène, et
        - une phase élastomérique dispersée dans la matrice,

    (ii) des microsphères d'aluminosilicate solide présentant une taille médiane de particule $d_{50}$ de moins de 100 $\mu$m, où les microsphères d'aluminosilicate solide sont obtenues à partir de cendres volantes.

2. Composition selon la revendication 1, dans laquelle le co-polymère de propylène de la matrice comprend des motifs de co-monomère dérivés d'éthylène et/ou d'une alpha-oléfine en $C_{4\,à\,8}$, et/ou le co-polymère de propylène de la matrice présente une teneur en co-monomère de 35 % en poids ou moins.

3. Composition selon la revendication 1 ou 2, dans laquelle la phase élastomérique dispersée dans la matrice est un élastomère d'éthylène/alpha-oléfine en $C_{3\,à\,8}$.

4. Composition selon l'une des revendications précédentes, dans laquelle le polymère hétérophasique présente un indice de fluage MFR (230 °C, 2,16 kg) de 0,25 g/10 min à 100 g/10 min, et/ou dans laquelle le polymère hétérophasique présente une fraction soluble à froid dans le xylène XCS de 10 % en poids à 45 % en poids.

5. Composition selon l'une des revendications précédentes, dans laquelle les microsphères d'aluminosilicate solide présentent une masse volumique de 2, 0 g/cm$^3$ à 2, 3 g/cm$^3$.

6. Composition selon l'une des revendications précédentes, dans laquelle les microsphères d'aluminosilicate solide comprennent une couche de surface hydrophobe, qui est de préférence obtenue en faisant réagir la surface des microsphères d'aluminosilicate solide avec un agent d'hydrophobisation.

7. Composition selon l'une des revendications précédentes, dans laquelle les microsphères d'aluminosilicate solide sont présentes dans une quantité de 1 % en poids à 60 % en poids, par rapport au poids total de la composition.

8. Composition selon l'une des revendications précédentes, dans laquelle la composition présente un indice de fluage MFR (230 °C, 2,16 kg) de 0,25 g/10 min à 60 g/10 min, et/ou dans laquelle la composition présente une quantité de solubles à froid dans le xylène XCS de 5 % en poids à 40 % en poids.

9. Composition selon l'une des revendications précédentes, dans laquelle la composition présente une masse volumique de 0,95 g/cm$^3$ à 1,3 g/cm$^3$.

10. Composition selon l'une des revendications précédentes, dans laquelle la composition présente une résistance à la rayure $\Delta$L, mesurée par la méthode définie dans la description, de moins de 5,0, et/ou dans laquelle la composition présente une teneur en volatils de moins de 50 $\mu$g équivalents carbone/g, mesurée selon VDA 277.

11. Composition selon l'une des revendications précédentes, dans laquelle la composition présente une résilience Charpy, déterminée selon ISO 179/1eA, d'au moins 4,0 kJ/m$^2$ à 23 °C.

12. Article, de préférence article moulé par injection, comprenant la composition selon l'une des revendications 1 à 11.

13. Utilisation des microsphères d'aluminosilicate solide selon l'une des revendications 1 à 11, comme additif anti-rayure dans une poly(oléfine).

14. Utilisation des microsphères d'aluminosilicate solide selon l'une des revendications 1 à 11, pour réduire la quantité de volatils, déterminée selon VDA 277, d'une poly(oléfine).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AT 408885 B
- US 4259230 A
- JP 01318051 A
- EP 1942135 A1

- US 3300459 A
- US 5919877 A
- EP 0060090 A1

**Non-patent literature cited in the description**

- DUTRAL, Ethylene-Propylene Elastomers. EniChem, 1991, 1-4

- **THOMAS KOCH ; DORIS MACHL.** Evaluation of scratch resistance in multiphase PP blends. *POLYMER TESTING,* 2007, vol. 26, 927-936